# FASCICULE DE BREVET EUROPEEN

(11) **EP 3 147 070 B1**
(45) Date de publication et mention de la délivrance du brevet: **08.04.2020**
(21) Numéro de dépôt: 16190079.0
(22) Date de dépôt: 22.09.2016
(51) Int. Cl.: B23P 6/00, B23K 9/04, B23K 9/167, B23K 9/173, B23K 9/23, B23K 15/00, B23K 26/00, B23K 26/03, B23K 26/08, B23K 26/06, B23K 26/144, B23K 26/352, B23K 101/00, B23K 103/04, B23B 5/32, B23K 26/34

(54) **PROCÉDÉ DE REPROFILAGE D'UNE ROUE USÉE D'UN VÉHICULE FERROVIAIRE ET SYSTÈME DE REPROFILAGE ASSOCIÉ**
VERFAHREN ZUR REPROFILIERUNG EINES VERSCHLISSENEN RADS EINES SCHIENENFAHRZEUGS, UND ENTSPRECHENDES REPROFILIERUNGSSYSTEM
REPROFILING METHOD OF A WORN WHEEL OF A RAILROAD VEHICLE AND ASSOCIATED REPROFILING SYSTEM

(30) Priorité: 22.09.2015 FR 1558951
(43) Date de publication de la demande: 29.03.2017
(73) Titulaire: ALSTOM Transport Technologies, 93400 Saint-Ouen (FR)
(72) Inventeur: PEREIRA, Jorge, 64200 BIARRITZ (FR)
(74) Mandataire: Lavoix

(56) Documents cités:
- EP-A2- 0 416 852
- WO-A1-2013/165418
- CN-Y- 200 967 119
- DE-C1- 3 509 582
- RU-C1- 2 080 232
- RU-C1- 2 124 974
- US-A- 3 667 329
- US-A- 4 866 642
- US-A1- 2014 033 535
- DATABASE WPI Week 199826 Thomson Scientific, London, GB; AN 1998-295691 XP002757516, -& RU 2 095 211 C1 (ENG TECH CENTRE) 10 novembre 1997 (1997-11-10)

## Description

La présente invention concerne un procédé de reprofilage d'une roue usée d'un véhicule ferroviaire et un système permettant la mise en oeuvre d'un tel procédé.

Communément, une roue d'un véhicule ferroviaire est montée sur un essieu, qui définit un axe de rotation de cette roue. L'essieu est fixé à un bogie, qui supporte la caisse du véhicule ferroviaire d'une manière permettant le déplacement du véhicule ferroviaire le long d'une voie ferrée.

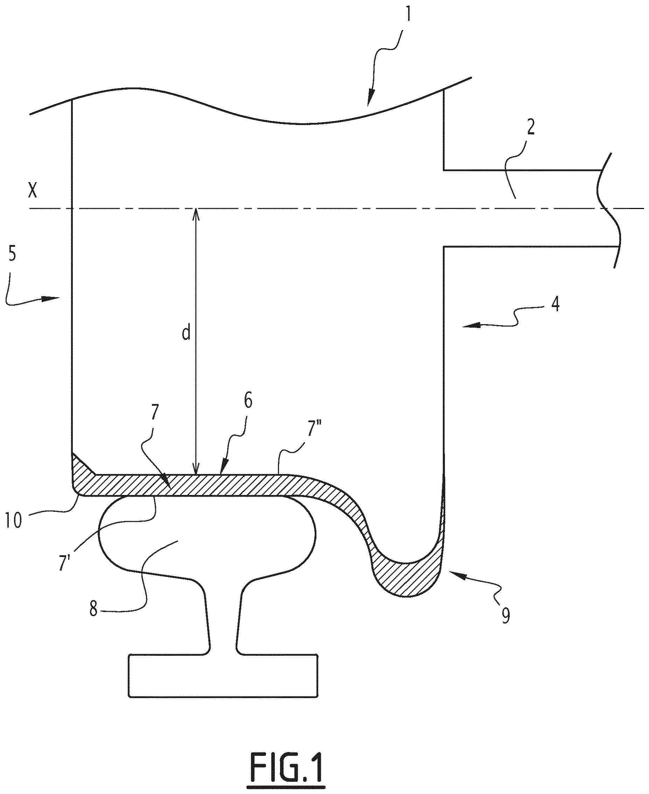

Une telle roue est schématiquement illustrée sur la figure 1.

Ainsi, en référence à cette figure, la roue 1 comporte une face transversale interne 4, une face transversale externe 5 et une surface latérale, dite surface de contact 7, connectant les faces 4 et 5.

La surface de contact 7 comporte une surface latérale 6 de forme sensiblement tronconique et une surface saillante 9 formant un bourrelet, également appelé boudin, du côté de la face interne 4.

La surface de contact 7 est, au moins en partie, en contact avec un rail 8 de la voie ferrée lors du déplacement du véhicule ferroviaire.

Au fur et à mesure de l'exploitation du véhicule ferroviaire, la surface de contact 7 des roues subit des dégradations causées notamment par la friction avec le rail 8. En particulier, de la matière est enlevée de la roue 1. C'est ce qui est représenté par la partie hachurée sur la figure 1. Ceci conduit alors à une altération du profil de la surface de contact 7 qui a pour conséquence une diminution de l'adhérence entre la roue 1 et le rail 8.

Une portion de la surface de contact 7 ayant subie une telle dégradation est appelée par la suite zone usée. Une zone usée correspond à une déformation du profil de la surface de contact, et s'étend sur le périmètre de la roue. Notamment, l'adhérence entre la surface de contact et le rail est diminuée dans les zones usées par rapport au reste de la surface de contact.

Le profil d'une roue passe ainsi d'un profil initial à un profil usé. Sur la figure 1, le profile initial de la roue 1 est désigné par la référence 7' et le profil usé est désigné par la référence 7".

Pour éliminer les zones usées ou pour au moins minimiser leur nombre sur la surface de contact, des opérations de maintenance du véhicule ferroviaire, dites de reprofilage des roues, sont effectuées avec une fréquence donnée. Ainsi, par exemple, lorsque le véhicule ferroviaire est un tramway, ces opérations sont réalisées quand le véhicule parcourt une distance donnée qui est comprise par exemple entre 10 000 km et 15 000 km.

Ces opérations peuvent être réalisées dans le cadre de la maintenance préventive ou alors dans celui de la maintenance corrective.

Lors d'une opération de reprofilage, le véhicule ferroviaire ou au moins un bogie de celui-ci, est immobilisé sur un tour en fosse afin de permettre une rotation libre de chaque roue.

Puis, un procédé de reprofilage est appliqué à chaque roue pour lui rendre son profil initial.

Selon les procédés de reprofilage conventionnels, la surface de contact 7 d'une roue est usinée de manière à faire disparaitre les zones usées.

Plus précisément, le profil de la roue est usiné de manière à retrouver un profil correspondant au profil initial de la roue mais avec un diamètre plus réduit.

Lorsque l'enlèvement de la matière n'est plus possible, c'est-à-dire lorsque le diamètre de la roue devient trop faible, la roue est définitivement usée et est remplacée par une autre roue.

Ainsi, par exemple, durant son cycle de vie, une roue de tramway passe d'un diamètre initial de 590 mm à un diamètre final de 530 mm. Au-delà de ce diamètre final, la roue est remplacée.

On conçoit ainsi qu'une roue ferroviaire présente un cycle de vie limité par le nombre maximal de reprofilage que cette roue peut supporter.

On connait par ailleurs le document RU 2 124 974 C1 décrivant le reprofilage d'une roue par ajout d'un matériau d'apport.

La présente invention a pour but de proposer un procédé de reprofilage alternatif, permettant notamment de diminuer les coûts de maintenance et d'exploitation d'un véhicule ferroviaire.

À cet effet, l'invention a pour objet un procédé de reprofilage conforme à la revendication 1.

Suivant d'autres aspects avantageux de l'invention, le procédé de reprofilage comprend une ou plusieurs des caractéristiques des revendications 2 à 10.

L'invention a également pour objet un système de reprofilage conforme à la revendication 11.

Suivant d'autres aspects avantageux de l'invention, le système de reprofilage comprend les caractéristiques de la revendication 12.

Ces caractéristiques et avantages de l'invention apparaitront à la lecture de la description qui va suivre, donnée uniquement à titre d'exemple non limitatif, et faite en référence aux dessins annexés sur lesquels :
- la figure 1 est une vue schématique en coupe diamétrale d'une roue d'un véhicule ferroviaire;
- la figure 2 est une vue schématique en coupe transversale d'un tour en fosse comportant un système de reprofilage d'une roue, selon un premier mode de réalisation de l'invention, le système de reprofilage comportant notamment un module laser ;
- la figure 3 est une vue schématique en coupe transversale selon le plan III-III de la figure 2 du tour en fosse de la figure 2 ;
- la figure 4 est une vue schématique du module laser du système de reprofilage de la figure 2 ;
- la figure 5 est un organigramme d'un procédé de reprofilage selon l'invention mis en oeuvre au moyen du système de reprofilage de la figure 2 ; et
- la figure 6 est une vue analogue à celle de la figure 2, le tour en fosse comportant un système de reprofilage d'une roue selon un deuxième mode de réalisation de l'invention.

Dans la suite de la description, l'expression « sensiblement égal à » s'entend comme une relation d'égalité à plus ou moins 10 %.

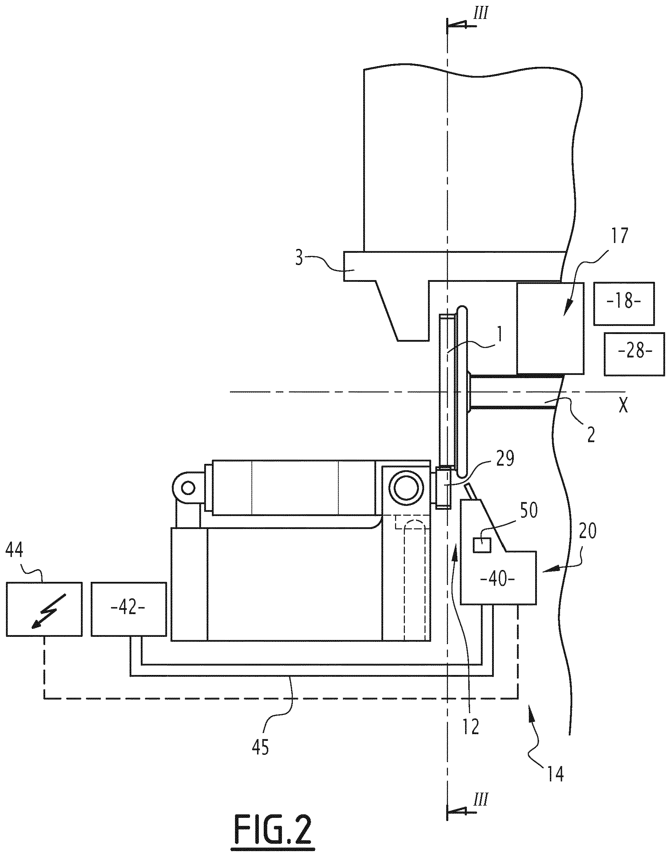

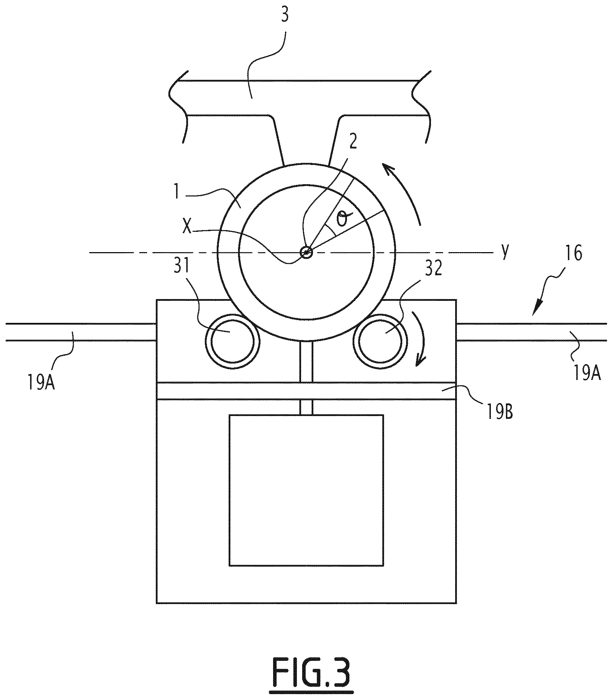

En référence à la figure 1, la roue 1 est montée sur un essieu 2. L'essieu 2 fait partie d'un bogie 3 visible sur les figures 2 et 3. L'essieu 2 définit un axe transversal X. Le bogie 3 comporte notamment une surface horizontale sur laquelle la caisse du véhicule ferroviaire est montée.

La roue 1 est par exemple réalisée en un matériau métallique ou en un alliage, tel qu'un acier.

La roue 1 comporte une face transversale interne 4, côté essieu 2, une face transversale externe 5, côté opposé à l'essieu et sensiblement parallèle à la face proximale 4, et une surface de contact 7 périphérique, connectant les faces 4 et 5.

La surface de contact 7 est apte à entrer en contact avec un rail 8 lors du déplacement du véhicule ferroviaire.

La surface de contact 7 évolue au cours de la durée de vie de la roue 1 et du déplacement du véhicule ferroviaire.

La surface de contact 7 comporte ainsi au moins une zone usée 10. La surface de contact 7 résulte la révolution autour ce l'axe X, d'un profil situé à une distance d de l'axe X.

Une zone usée 10 s'étend en une portion axiale du profil de la surface de contact 7 et sur la totalité de la périphérie de la surface de contact 7.

Le système de reprofilage 12 illustré sur la figure 2 permet d'éliminer, au moins partiellement la ou chaque zone usée 10 de la roue 1 en mettant un œuvre un procédé de reprofilage, décrit par la suite en détail, consistant à ajouter de la matière sur la surface de contact 7, de manière de retrouver un profil proche du profil initial de la roue 1 avec un diamètre sensiblement égal au diamètre initial de la roue, notamment le diamètre en début du cycle de vie de celle-ci.

Le système de reprofilage 12 est installé à poste, dans un tour en fosse 14 illustré sur les figures 2 et 3.

Pour des raisons de simplicité de représentation, seule une moitié du tour en fosse 14 est illustrée et sera décrite par la suite. La moitié non-illustrée est sensiblement symétrique à celle illustrée.

En référence aux figures 2 et 3, le tour en fosse 14 comporte notamment des moyens de maintien 16, des moyens de bridage 17 et une unité de pilotage 18 du fonctionnement de ces moyens 16 et 17.

Les moyens de maintien 16 permettent de maintenir le véhicule ferroviaire afin d'autoriser une rotation libre de la roue 1. En particulier, en référence à la figure 3, les moyens de maintien 16 comprennent un rail fixe 19A et un rail amovible 19B.

Le rail fixe 19A permet de maintenir des roues du véhicule ferroviaire autres que la roue 1 et alignées avec celle-ci.

Le rail amovible 19B est mobile entre une première position et une deuxième position. Dans la première position, le rail amovible 19B et le rail fixe 19A forment un rail unique sensiblement parallèle à l'axe Y. Dans la deuxième position, le rail amovible 19B est à l'écart du rail fixe 19A afin d'autoriser une rotation libre de la roue 1.

Le mouvement du rail amovible 19B est commandé par l'unité de pilotage 18.

Les moyens de bridage 17 permettent de bloquer en position le bogie 3 lorsque la roue 1 est disposée sur le rail amovible 19B. En particulier, les moyens de bridage 17 permettent de brider le bogie 3 de manière automatique à partir d'une commande correspondante introduite par l'opérateur via l'unité de pilotage 18.

Le tour en fosse 14 délimite un espace d'accès 20 à la roue 1 à partir du dessous du véhicule ferroviaire. Le système de reprofilage 12 est disposé dans l'espace d'accès 20.

Le système de reprofilage 12 comporte un moyen d'entrainement en rotation de la roue 1, un moyen de nettoyage de la surface de contact 7, un moyen de prise de mesures relatives à la surface de contact 7 pour déterminer au moins une zone usée 10, un moyen d'ajout d'un matériau d'apport dans au moins une zone usée 10, un moyen de polissage de la surface de contact 7, et un moyen de commande de ces différents moyens.

Le moyen de commande comprend un calculateur de commande 28 disposé à proximité de l'unité de pilotage 18 et mettant en œuvre un logiciel de commande des différents moyens du système de reprofilage 12 sous le contrôle d'un opérateur.

Le moyen d'entrainement en rotation de la roue 1 et le moyen de polissage de la surface de contact 7 se présentent sous la forme d'un dispositif d'entrainement unique comportant notamment un ensemble de galets 29.

Selon l'exemple de réalisation illustré sur la figure 3, l'ensemble de galets 29 comporte un premier galet 31 et un deuxième galet 32 disposés selon un axe longitudinal Y parallèle à la surface horizontale du bogie 3 et perpendiculaire à l'axe transversal X.

Les galets 31 et 32 sont mobiles selon l'axe transversal X et selon l'axe longitudinal Y pour permettre le centrage de la roue 1. Le déplacement des galets 31 et 32 est piloté à partir du calculateur de commande 28.

Chaque galet 31 et 32 comporte un axe de rotation parallèle à l'axe transversal X autour duquel il est apte à tourner entrainé par des moyens de motorisation prévus à cet effet et connus en soi.

Chaque galet 31 et 32 présente une forme cylindrique et comporte une surface latérale apte à entrer en contact avec la surface de contact 7 de la roue 1 de manière à entrainer en rotation de la roue 1.

La surface latérale de chaque galet 31 et 32 comporte un revêtement apte à supporter une température inférieure par exemple à 550° C, de préférence inférieure à 500° C.

Le revêtement de la surface latérale des galets 31 et 32 permet en outre le polissage de la surface de contact 7 de la roue 1 à la suite de l'ajout de matière dans une étape finale du procédé de reprofilage comme ceci sera expliqué par la suite.

Selon un exemple de réalisation, le tour en fosse 14 comporte en outre un système de ventilation présentant une pluralité de hottes d'aspiration aptes à aspirer la poussière et la fumée issues du polissage de la surface de contact 7 de la roue 1.

Selon un exemple de réalisation non illustré, l'ensemble de galets 29 comporte une première paire de galets et une deuxième paire de galets.

Chaque paire de galets est sensiblement analogue aux galets 31 et 32 décrits précédemment.

À la différence des galets 31 et 32, la surface latérale de chaque galet de la première paire de galets est apte à entrer en contact avec une première partie de la surface de contact 7 de la roue 1. Cette première partie est par exemple adjacente à la face distale 5 de la roue 1.

La surface latérale de chaque galet de la deuxième paire de galets est apte à entrer en contact avec une deuxième partie de la surface de contact 7 de la roue 1. La deuxième partie de la surface de contact 7 est par exemple complémentaire à la première partie et adjacente à la face 4 de la roue 1.

Le moyen de nettoyage, le moyen de prise des mesures et le moyen d'ajout du matériau d'apport du système de reprofilage 12 sont intégrés dans un dispositif de rechargement 40 unique, raccordé au calculateur de commande 28, à un réservoir 42 du matériau d'apport et à des armoires électriques 44.

Le réservoir 42 est disposé à l'extérieur du tour en fosse 14 et raccordé au dispositif 40 par un système d'aspiration 45 du matériau d'apport.

Le matériau d'apport comprend une poudre métallique.

Le système d'aspiration 45 est apte à aspirer la poudre métallique pour la conduire vers le bâti 40.

Les armoires électriques 44 sont aptes à alimenter en puissance électrique le dispositif 40 de manière connue en soi.

Le dispositif 40 comporte un module laser 50 dont le fonctionnement est piloté à partir du calculateur de commande 28.

En particulier, le module laser 50 est apte à émettre un faisceau laser vers la surface de contact 7 de la roue 1 pour nettoyer cette surface.

Le module 50 est apte, en outre, à émettre un faisceau laser vers la surface de contact 7 de la roue 1 pour prendre des mesures relatives à cette surface et les transmettre vers le calculateur de commande 28.

Le module laser 50 est apte enfin à émettre un faisceau laser vers la surface de contact 7 de la roue 1 pour mettre en œuvre une technique de fabrication et/ou de rechargement additive en utilisant la poudre métallique comme ceci sera expliqué par la suite.

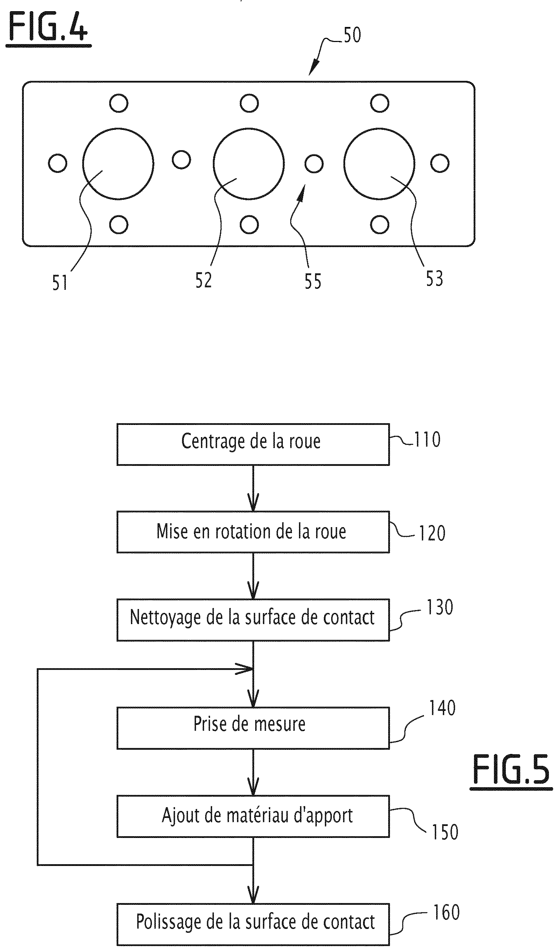

Le module laser 50 est illustré plus en détail sur la figure 4.

Selon l'exemple de réalisation de cette figure, le module laser 50 comporte trois têtes laser 51, 52 et 53 et une pluralité de buses de pulvérisation 55 disposées autour des têtes laser 51, 52 et 53.

Chaque tête laser 51, 52 et 53 est pilotée par le calculateur de commande 28 et apte à émettre un faisceau laser vers la surface de contact 7 de la roue 1. Les têtes laser 51, 52 et 53 sont alimentées par les armoires électriques 44.

Chaque tête laser 51, 52 et 53 est apte à balayer la surface de contact 7 de la roue 1 avec un débit maximal compris par exemple entre 200 cm³/h et 400 cm³/h, et sensiblement égal à 300 cm³/h.

Les buses 55 sont raccordées au réservoir 42 par le système d'aspiration 45 et sont aptes à pulvériser la poudre métallique au voisinage de la ou de chaque zone usée 10 de la roue 1.

Selon une variante de réalisation (non-illustrée), le module laser 50 comporte une seule tête laser apte à émettre un faisceau laser vers la surface de contact 7 de la roue 1.

Le procédé de reprofilage mis en œuvre par le système de reprofilage va désormais être expliqué en référence à la figure 5 présentant un organigramme de ses étapes.

Préalablement, le véhicule ferroviaire est amené au-dessus du tour en fosse 14. La roue 1 est disposée sur le rail amovible 19B qui se trouve dans sa première position, c'est-à-dire, aligné avec le rail fixe 19A.

Puis, le bogie 3 est bridé par les moyens de bridage 17.

Puis, le rail amovible 19B est mis dans sa deuxième position afin d'autoriser une rotation libre de la roue 1.

Lors de l'étape initiale 110, le calculateur 28 commande le déplacement de l'ensemble de galets 29 le long de l'axe transversal X et/ou longitudinal Y pour centrer la roue 1.

Les galets de l'ensemble de galets 29 sont alors en contact avec la surface de contact 7 de la roue 1.

Lors de l'étape 120 suivante, le calculateur 28 commande la mise en rotation des galets de l'ensemble de galets 29.

En conséquence, la roue 1 est mise en rotation autour de l'axe X.

Lors de l'étape 130 suivante, le calculateur 28 commande le fonctionnement de chaque tête laser 51 à 53 pour balayer et nettoyer la surface de contact 7 de la roue 1 en rotation.

Le nettoyage comprend notamment l'enlèvement de la poussière et d'autres types de saleté de la surface de contact 7.

Lors de l'étape 140 suivante, le calculateur 28 commande la prise de mesures relatives à la surface de contact 7 pour déterminer le profil courant de la surface de contact 7.

Ainsi, lors de cette étape, le faisceau laser émis par les têtes 51 à 53 balaye la surface de contact 7 et scanne son profil pour tous les angles θ entre 0 et 360°.

Les mesures relatives à la surface sont transmises au calculateur de commande 28 qui les analyse pour déterminer la ou chaque zone usée 10, c'est-à-dire la ou chaque zone pour laquelle le profil de la surface de contact 7 s'écarte, au-delà d'une tolérance prédéterminée, du profil initial de la roue.

Lors de l'étape 150 suivante, le module 28 commande l'ajout du matériau d'apport dans la ou chaque zone usée 10 déterminée.

Les galets sont actionnés pour faire tourner la roue 1.

Le module 28 commande alors la pulvérisation de la poudre métallique à travers les buses 55 vers la zone usée à combler.

L'ajout de la poudre métallique s'effectue par dépôt de couches successives en utilisant une technique de fabrication additive consistant à fusionner ou à fritter chaque nouvelle couche déposée avec la couche précédente, au moyen du faisceau laser émis par les têtes laser 51 à 53.

La technique de fabrication additive est choisie dans la liste consistant en :
- fusion sélective par laser (SLM, de l'anglais « Selective Laser Melting ») ;
- fusion par faisceau d'électrons (EBM, de l'anglais « Electron Beam Melting ») ;
- construction laser additive directe (CLAD, « Construction Laser Additive Direct ») ;
- fusion par arc plasma ;
- impression tridimensionnelle comprenant le collage des couches successives (« 3DPrinting » en anglais) ; et
- frittage sélectif par laser (SLS, de l'anglais « Selective Laser Sintering »).

Les étapes de prises de mesures 140 et d'ajout du matériau d'apport 150 sont effectuées de manière itérative jusqu'à la disparition de la ou de chaque zone usée 10 de la surface de contact 7, c'est-à-dire jusqu'à ce que le profil de la roue 1 corresponde, à la tolérance prédéterminée près, au profil initial.

Plus précisément, la ou chaque zone usée 10 est considérée comme disparue par le calculateur de commande 28 lorsque le profil de la surface de contact 7 satisfait à un critère de finition prédéterminé.

Ce critère consiste par exemple à comparer la profondeur de chaque cavité de la surface de contact 7 avec un seuil prédéterminé.

Lors de l'étape 160 suivante, le module 28 commande le polissage de la surface de contact 7 par les galets de l'ensemble de galets 31.

Lorsque l'ensemble de galets 31 est constitué de deux galets 31 et 32, les deux galets 31 et 32 sont utilisés pour polir la surface de contact 7, ou tout au moins la portion conique 6 de cette surface.

Lorsque l'ensemble de galets 31 est constitué de deux paires de galets, ces paires sont utilisées de manière alternée en fonction de la partie de la surface de contact 7 traitée.

Finalement, le module de commande 28 arrête la rotation de l'ensemble de galets 29.

Puis, le rail amovible 19B est mis dans sa première position et le bogie 3 est débridé par des commandes adaptées générée par l'unité de pilotage 18.

D'autres exemples de réalisation du système de reprofilage 12 et du procédé de reprofilage sont également possibles.

Ainsi, selon un exemple de réalisation, le polissage de la surface de contact 7 est mis en œuvre par le faisceau laser émis par au moins une tête laser 51 à 53. Selon cet exemple de réalisation, l'ensemble de galets 31 est utilisé en complément au polissage par le faisceau laser.

Selon encore un exemple de réalisation, les têtes laser 51 à 53 sont utilisées à des fins différentes. Ainsi, par exemple, la tête laser 51 est utilisée pour le nettoyage et la prise des mesures de la surface de contact 7, la tête laser 52 pour l'ajout du matériau d'apport et la tête laser 53 pour le polissage de la surface de contact 7.

Selon encore un exemple de réalisation, les galets 31 et 32 sont raccordés à un module de création d'un champ magnétique.

En particulier, par l'intermédiaire du module de création du champ magnétique, le premier galet 31 permet d'aimanter la roue 1 lorsqu'une commande correspondante est donnée par le calculateur de commande 28.

De manière analogue, par l'intermédiaire du module de création du champ magnétique, le deuxième galet 32 permet de désaimanter la roue 1 lorsqu'une commande correspondante est donnée par le calculateur de commande 28.

Selon cet exemple de réalisation, le matériau d'apport comprend une poudre métallique qui est aimantée par un électroaimant prévu à cet effet dans le réservoir 42.

Ainsi, lors de la mise en œuvre du procédé de reprofilage selon cet exemple de réalisation, le premier galet 31 aimante initialement la roue 1 de sorte que la polarité de la roue 1 aimantée soit opposée à celle de la poudre métallique présente dans le réservoir 42.

Puis, lors de l'étape de la pulvérisation de la poudre métallique, la poudre est aimantée par la roue 1 ce qui réduit la quantité de la poudre nécessaire pour le reprofilage de la roue 1.

À la fin du procédé de reprofilage, le module 28 commande la désaimantation de la roue 1 par le deuxième galet 32.

Selon un autre exemple de réalisation, le premier galet 31 est apte à électriser la roue 1 en lui transmettant des charges électriques. La roue 1 acquière ainsi une polarisation électrique

Selon cet exemple de réalisation, le réservoir 42 comporte alors des billes électrisées permettant de charger la poudre métallique avec une polarité électrique opposée à celle de la roue électrisée 1.

Ainsi, lors de la mise en œuvre du procédé de reprofilage, la poudre métallique est attirée vers la surface de contact 7 par des forces électrostatiques.

Selon encore un exemple de réalisation, la prise de mesures du profil usé de la surface de contact 7 est effectuée par un outil conventionnel, utilisant par exemple une pluralité de palpeurs.

Selon encore un exemple de réalisation, l'ajout du matériau d'apport comprend le soudage du matériau d'apport dans la zone usée placé en regard d'un dispositif d'apport de matière.

Le soudage est par exemple mis en œuvre en utilisant une technique de soudage de type TIG (de l'anglais « Tungsten Inert Gas ») ou MIG (de l'anglais « Métal Inert Gas ») ou encore une technique de soudage par ultrason.

Selon cet exemple de réalisation, le dispositif de rechargement comporte un module permettant la mise en œuvre de l'une desdites techniques.

Selon encore un exemple de réalisation, le dispositif de rechargement comporte une pluralité de modules permettant de mettre en œuvre des techniques de natures différentes.

Ainsi, par exemple, le dispositif de rechargement selon cet exemple de réalisation comporte un module analogue au module laser 50 présenté ci-dessus permettant la mise en œuvre d'une technique de fabrication additive par l'intermédiaire d'un faisceau laser, un module permettant la mise en œuvre d'une technique de soudage et un module permettant l'usinage de la roue 1 selon une technique de reprofilage conventionnelle.

Enfin, l'étape finale de polissage, qui peut d'ailleurs être réalisée autrement que par les galets de mise en rotation de la roue, peut être remplacée par une étape d'usinage de finition.

On conçoit alors que le système et le procédé de reprofilage selon l'invention permettent de réduire considérablement les coûts de maintenance et d'exploitation du véhicule ferroviaire.

En effet, selon l'invention, une roue ferroviaire n'est pas usinée ce qui permet de prolonger considérablement son cycle de vie. Le cycle de vie de la roue maintenue selon l'invention est alors limité par le vieillissement naturel de ces composants. Les roues sont ainsi remplacées moins souvent.

En variante, les opérations de maintenance de la roue présentent l'alternance des reprofilages par usinage et de reprofilage par ajout de matière.

La mise en œuvre du procédé de reprofilage selon l'invention est particulièrement simple et ne nécessite pas de démontage des roues du véhicule ferroviaire.

Outre les coûts de maintenance et d'exploitation, l'invention permet de réduire l'impact environnemental négatif causé par l'usinage des roues ferroviaires ainsi que l'encombrement du tour en fosse par des outils d'usinage conventionnels.

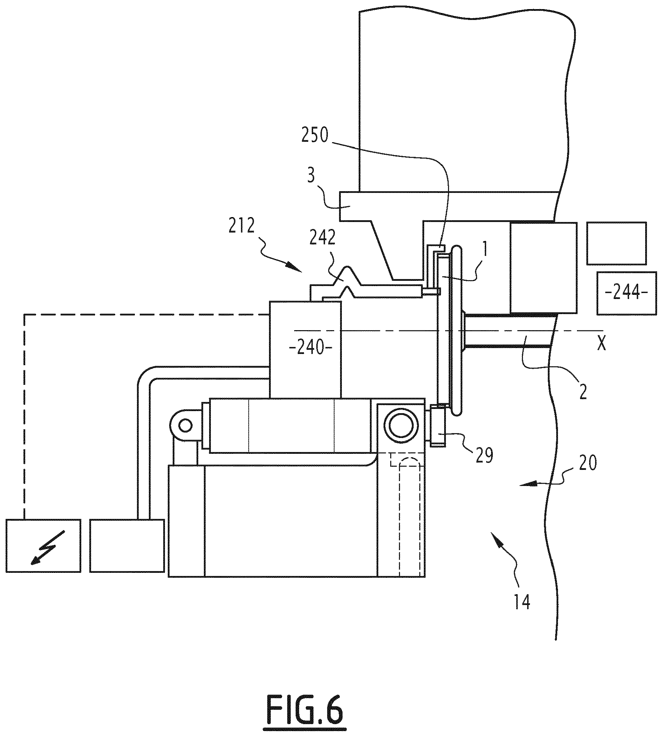

Un système de reprofilage 212 selon un deuxième mode de réalisation de l'invention est illustré sur la figure 6.

Le système de reprofilage 212 du deuxième mode de réalisation de l'invention permet de réduire l'encombrement de l'espace d'accès 20 du tour en fosse 14.

Le système de reprofilage 212 de la figure 6 est analogue au système de reprofilage 12 de la figure 2 et permet de mettre en œuvre un procédé de reprofilage comportant notamment une étape consistant à ajouter un matériau d'apport sur au moins une zone usée 10 de la roue 1.

À la différence du système de reprofilage 12, le dispositif de rechargement du système de reprofilage 212 est intégré dans un bâti 240 disposé à l'extérieur du tour fosse 14.

Le bâti 240 selon le deuxième mode de réalisation de l'invention est muni d'un bras robotisé 242 pour positionner les buses de pulvérisation et les têtes laser telles que décrites précédemment en surplomb de la roue 1.

Le bras robotisé 242 est par exemple commandé par un calculateur de commande 244 analogue au calculateur de commande 28 décrit précédemment.

Lorsque le système de reprofilage 212 est adapté pour mettre en œuvre l'ajout du matériau d'apport par l'intermédiaire d'un faisceau laser, une ou plusieurs têtes laser sont montées à une extrémité 250 du bras robotisé 242.

Le procédé de reprofilage selon le deuxième mode de réalisation de l'invention est sensiblement identique à celui décrit précédemment.

Avantageusement, à la différence, dans ce mode de réalisation, les étapes d'aimantation ou d'électrisation de la roue 1 et du matériau d'apport, peuvent être abandonnées en comptant sur la simple gravité pour que le matériau d'apport soit déposé sur la zone d'usure.

On conçoit alors que le système 212 et le procédé de reprofilage selon le deuxième mode de réalisation de l'invention permettent de réduire l'encombrement de l'espace d'accès 20 du tour en fosse 14.

En effet, le tour en fosse 14 selon ce mode de réalisation sert uniquement pour obtenir la mise en rotation de la roue 1 ce qui permet soit d'utiliser l'espace d'accès 20 pour d'autres besoins de maintenance, soit de réduire considérablement ses dimensions.

## Revendications

1. Procédé de reprofilage d'une roue (1) usée d'un véhicule ferroviaire, ladite roue (1) comportant une surface de contact (7) destinée à entrer en contact avec un rail (8) lors du déplacement du véhicule ferroviaire, **caractérisé :**
- **en ce qu'**il comporte, sans démonter la roue (1) du véhicule ferroviaire, une étape (150) consistant à ajouter un matériau d'apport sur au moins une zone usée (10) de ladite surface de contact (7) de la roue (1), le matériau d'apport comprenant une poudre métallique ;
- **en ce que** l'ajout du matériau d'apport dans la zone usée (10) s'effectue par dépôt de couches successives ; et
- **en ce que** l'étape consistant à ajouter un matériau d'apport dans la zone usée (10) comprend la mise en œuvre d'une technique de fabrication additive consistant à fusionner ou à fritter chaque couche de poudre métallique suivante avec une couche de poudre métallique précédente.

2. Procédé selon la revendication 1, comportant en outre des étapes consistant à :
- mettre (120) en rotation la roue (1) ;
- nettoyer (130) la surface de contact (7) de la roue (1) ; et,
- prendre (140) des mesures relatives à un profil de la surface de contact (7) et identifier au moins une zone usée (10) sur ladite surface de contact (7) ;
lesdites étapes étant effectuées avant l'étape (150) consistant à ajouter un matériau d'apport.

3. Procédé selon la revendication 1 ou la revendication 2, comportant en outre une étape (160) de finition de la surface de contact (7) de la roue (1) après l'étape (150) consistant à ajouter un matériau d'apport.

4. Procédé selon l'une quelconque des revendications précédentes, dans lequel la poudre métallique est pulvérisée sur la surface de contact (7) au voisinage de la zone usée (10).

5. Procédé selon l'une quelconque des revendications précédentes, dans lequel l'étape (150) consistant à ajouter un matériau d'apport met en œuvre une technique choisie dans la liste consistant en :
- fusion sélective par laser ;
- fusion par faisceau d'électrons ;
- construction laser additive directe ;
- fusion par arc plasma ;
- impression tridimensionnelle comprenant le collage de couches successives ; et
- frittage sélectif par laser.

6. Procédé selon l'une quelconque des revendications précédentes, dans lequel l'étape consistant à ajouter un matériau d'apport comprend le soudage du matériau d'apport dans la zone usée (10).

7. Procédé selon l'une quelconque des revendications précédentes, comprenant en outre des étapes consistant à :
- fournir un matériau d'apport comprenant une poudre métallique aimantée présentant une polarité magnétique ;
- aimanter (130) la roue (1) pour qu'elle acquière une polarité magnétique opposée à celle de la poudre métallique ;
- désaimanter (160) la roue (1) aimantée ;
l'aimantation de la roue (1) étant effectuée avant l'étape (150) consistant à ajouter un matériau d'apport, la désaimantation de la roue (1) étant effectuée après l'étape (150) consistant à ajouter un matériau d'apport.

8. Procédé selon l'une quelconque des revendications 1 à 6, comprenant en outre des étapes consistant à :
- fournir un matériau d'apport comprenant une poudre métallique chargée de charges électriques de polarité électrique identique ;
- électriser (130) avec des charges électriques la roue (1), une polarité électrique de la roue (10) électrisée étant opposée à celle de la poudre métallique ;
- désélectriser (160) la roue (1) électrisée ;
l'électrisation de la roue (1) étant effectuée avant l'étape (150) consistant à ajouter un matériau d'apport, la désélectrisation de la roue (1) étant effectuée après l'étape (150) consistant à ajouter un matériau d'apport.

9. Procédé selon l'une quelconque des revendications 2 à 8, dans lequel le nettoyage de la surface de contact (7) et/ou la prise des mesures relatives à un profil de la surface de contact (7) et/ou le polissage de la surface de contact (7) sont effectués au moyen d'un faisce13-15au laser.

10. Procédé selon l'une quelconque des revendications 2 à 9, dans lequel les étapes de détermination (140) d'au moins une zone usée (10) sur la surface de contact (7) et l'étape (150) consistant à ajouter un matériau d'apport sur la surface de contact (7) sont effectuées de manière itérative jusqu'à disparition de la ou de chaque zone usée (10) identifiée sur la surface de contact (7).

11. Système (12) de reprofilage d'une roue (1) usée d'un véhicule ferroviaire, **caractérisé en ce qu'**il est apte à mettre en œuvre un procédé selon l'une quelconque des revendications précédentes, le système (12) comportant :
- un moyen d'entrainement en rotation de la roue (1) ;
- un moyen de nettoyage de la surface de contact (7) de la roue (1) ;
- un moyen de prise de mesures relatives à un profil d'une surface de contact (7) de la roue (1) pour identifier au moins une zone usée (10) sur ladite surface de contact (7) ;
- un moyen d'ajout d'un matériau d'apport dans au moins une zone usée (10) identifiée ;
- un moyen de polissage de la surface de contact (7) de la roue (1).

12. Système (12) selon la revendication 11, dans lequel le moyen de nettoyage, le moyen de prise de mesures et le moyen d'ajout d'un matériau d'apport sont intégrés dans un dispositif de rechargement (40) unique.

## Patentansprüche

1. Verfahren zur Runderneuerung eines verschlissenen Rades (1) eines Schienenfahrzeugs, wobei das Rad (1) eine Kontaktfläche (7) aufweist, die dazu vorgesehen ist, während des Fahrens des Schienenfahrzeugs mit einer Schiene (8) in Kontakt zu treten, **dadurch gekennzeichnet:**
- **dass** es aufweist, ohne Demontieren des Rades (1) von dem Schienenfahrzeug, einen Schritt (150) bestehend aus Hinzufügen eines Füllermaterials auf wenigstens einen verschlissenen Bereich (10) der besagten Kontaktfläche (7) des Rades (1), wobei das Füllermaterial ein Metallpulver aufweist,
- **dass** das Hinzufügen des Füllermaterials in dem verschlissenen Bereich (10) durchgeführt wird durch Ablagern von sukzessiven Schichten, und
- **dass** der Schritt bestehend aus Hinzufügen eines Füllermaterials in dem verschlissenen Bereich (10) aufweist das Durchführen einer Technik der additiven Fertigung bestehend aus Fusionieren oder aus Sintern jeder nachfolgenden Metallpulver-Schicht mit einer vorhergehenden Metallpulver-Schicht.

2. Verfahren gemäß Anspruch 1, ferner aufweisend die Schritte bestehend aus:
- Drehen (120) des Rades (1),
- Reinigen (130) der Kontaktfläche (7) des Rades (1) und
- Nehmen (140) von relativen Maßen an einem Profil der Kontaktfläche (7) und Identifizieren wenigstens eines verschlissenen Bereichs (10) auf der besagten Kontaktfläche (7),
wobei die Schritte durchgeführt werden vor dem Schritt (150) bestehend aus Hinzufügen eines Füllermaterials.

3. Verfahren gemäß Anspruch 1 oder Anspruch 2, ferner aufweisend einen Schritt (160) der Endbearbeitung der Kontaktfläche (7) des Rades (1) nach dem Schritt (150) bestehend aus Hinzufügen eines Füllermaterials.

4. Verfahren gemäß irgendeinem der vorhergehenden Ansprüche, wobei das Metallpulver auf der Kontaktfläche (7) benachbart zu dem verschlissenen Bereich (10) verstäubt wird.

5. Verfahren gemäß irgendeinem der vorhergehenden Ansprüche, wobei der Schritt (150) bestehend aus Hinzufügen eines Füllermaterials eine Technik durchführt, die aus der Liste ausgewählt ist, die besteht aus:
- selektivem Fusionieren per Laser,
- Fusionieren per Elektronenstrahl,
- direktes additives Laser-Aufbauen,
- Fusionieren per Plasmabogen,
- dreidimensionalem Drucken umfassend das Verschweißen der sukzessiven Schichten, und
- selektives Sintern per Laser.

6. Verfahren gemäß irgendeinem der vorhergehenden Ansprüche, wobei der Schritt bestehend aus Hinzufügen eines Füllermaterials aufweist das Verschweißen des Füllermaterials im verschlissenen Bereich (10).

7. Verfahren gemäß irgendeinem der vorhergehenden Ansprüche, ferner aufweisend die Schritte bestehend aus:
- Bereitstellen eines Füllermaterials, das ein magnetisches Metallpulver aufweist, das eine magnetische Polarität hat,
- Magnetisieren (130) des Rades (1), damit es eine magnetische Polarität erlangt, die zu jener des Metallpulvers entgegengesetzt ist,
- Entmagnetisieren (160) des magnetisierten Rades (1),
wobei das Magnetisieren des Rades (1) durchgeführt wird vor dem Schritt (150) bestehend aus Hinzufügen eines Füllermaterials, wobei das Entmagnetisieren des Rades (1) durchgeführt wird nach dem Schritt (150) bestehend aus Hinzufügen eines Füllermaterials.

8. Verfahren gemäß irgendeinem der Ansprüche 1 bis 6, ferner aufweisend die Schritte bestehend aus:
- Bereitstellen eines Füllermaterials, das ein Metallpulver aufweist, das mit elektrischen Ladungen identischer elektrischer Polarität geladen ist,
- Elektrisieren (130) des Rades (1) mit elektrischen Ladungen, wobei eine elektrische Polarität des elektrisierten Rades (10) entgegengesetzt ist zu jener des Metallpulvers,
- De-Elektrisieren (160) des elektrisierten Rades (1),
wobei das Elektrisieren des Rades (1) durchgeführt wird vor dem Schritt (150) bestehend aus Hinzufügen eines Füllermaterials, wobei das De-Elektrisieren des Rades (1) durchgeführt wird nach dem Schritt (150) bestehend aus Hinzufügen eines Füllermaterials.

9. Verfahren gemäß irgendeinem der Ansprüche 2 bis 8, wobei das Reinigen der Kontaktfläche (7) und/oder das Nehmen der relativen Maße an einem Profil der Kontaktfläche (7) und/oder das Polieren der Kontaktfläche (7) durchgeführt werden mittels eines Laser-Strahls 13-15.

10. Verfahren gemäß irgendeinem der Ansprüche 2 bis 9, wobei die Schritte des Ermittelns (140) wenigstens eines verschlissenen Bereichs (10) auf der Kontaktfläche (7) und der Schritt (150) bestehend aus Hinzufügen eines Füllermaterials auf die Kontaktfläche (7) iterativ durchgeführt werden bis zum Verschwinden des oder jedes verschlissenen Bereichs (10), der auf der Kontaktfläche (7) identifiziert ist.

11. System (12) zur Runderneuerung eines verschlissenen Rades (1) eines Schienenfahrzeugs, **dadurch gekennzeichnet, dass** es imstande ist, ein Verfahren gemäß irgendeinem der vorhergehenden Ansprüche durchzuführen, wobei das System (12) aufweist:
- ein Mittel zum Drehantreiben des Rades (1),
- ein Mittel zum Reinigen der Kontaktfläche (7) des Rades (1),
- ein Mittel zum Nehmen von relativen Maßen an einem Profil einer Kontaktfläche (7) des Rades (1) zum Identifizieren wenigstens eines verschlissenen Bereichs (10) auf der besagten Kontaktfläche (7),
- ein Mittel zum Hinzufügen eines Füllermaterials in wenigstens einem identifizierten verschlissenen Bereich (10),
- ein Mittel zum Polieren der Kontaktfläche (7) des Rades (1).

12. System (12) gemäß Anspruch 11, wobei das Mittel zum Reinigen, das Mittel zum Nehmen von Maßen und das Mittel zum Hinzufügen eines Füllermaterials integriert sind in eine einzige Auftragsvorrichtung (40).

## Claims

1. A method for reprofiling a worn wheel (1) of a railway vehicle, said wheel (1) including a contact surface (7) intended to come into contact with a rail (8) during the displacement of the railway vehicle, **characterized:**
- **in that** it includes, without disassembling the wheel (1) of the railway vehicle, a step (150) consisting of adding an additional material over at least one worn area (10) of said contact surface (7) of the wheel (1), the additional material comprising a metal powder;
- **in that** the addition of the additional material in the worn area (10) is carried out by depositing successive layers; and
- **in that** the step consisting of adding an additional material in the worn area (10) comprises the application of an additive manufacturing technique consisting of melting or sintering each following metal powder layer with a preceding metal powder layer.

2. The method according to claim 1, further including steps consisting of:
- setting (120) the wheel into rotation (1);
- cleaning (130) the contact surface (7) of the wheel (1); and,
- taking (140) measurements relating to a profile of the contact surface (7) and identifying at least one worn area (10) on said contact surface (7);
said steps being carried out before step (150) consisting of adding an additional material.

3. The method according to claim 1 or claim 2, further including a step (160) for finishing the contact surface (7) of the wheel (1) after the step (1500 consisting of adding an additional material.

4. The method according to any of the preceding claims, wherein the additional material comprises a sprayed metal powder or melted wires on the contact surface (7) in the vicinity of the worn area (10).

5. The method according to any of the preceding claims, wherein the step (150) consisting of adding an additional material applies a technique selected from the list consisting in:
- selective laser melting;
- electron beam melting;
- construction laser additive direct;
- melting with a plasma arc;
- 3D printing comprising adhesive bonding of successive layers; and
- selective laser sintering.

6. The method according to any of the preceding claims, wherein the step consisting of adding an additional material comprises welding of the additional material in the worn area (10).

7. The method according to any of the preceding claims, further comprising steps consisting of:
- providing an additional material comprising a magnetized metal powder having a magnetic polarity;
- magnetizing (130) the wheel (1) so that it acquires a magnetic polarity opposite to the one of the metal powder;
- demagnetizing (160) the magnetized wheel (1);
the magnetization of the wheel (1) being carried out before the step (150) consisting of adding an additional material, the demagnetization of the wheel (1) being carried out after the step (150) consisting of adding an additional material.

8. The method according to any of claims 1 to 6, further comprising steps consisting of:
- providing an additional material comprising a metal powder loaded with electric charges of identical electric polarity;
- electrifying (130) with electric charges the wheel (1), an electric polarity of the electrified wheel being opposite to that of the metal powder;
- de-electrifying (160) the electrified wheel (1);
the electrification of the wheel (1) being carried out before step (150) consisting of adding an additional material, the de-electrification of the wheel (1) being carried out before step (150) consisting of adding an additional material.

9. The method according to any of claims 2 to 8, wherein the cleaning of the contact surface (7) and/or the taking of measurements relating to a profile of the contact surface (7) and/or the polishing of the contact surface (7) are carried out by means of a laser beam.

10. The method according to any of claims 2 to 9, wherein the steps for determining (140) at least one worn area (10) on the contact surface (7) and the step (150) consisting of adding an additional material on the contact surface (7) are carried out iteratively until disappearance of said or each worn area (10) identified on the contact surface (7).

11. A system (12) for reprofiling a worn wheel (1) of a railway vehicle, **characterized in that** it allows application of a method according to any of the preceding claims, the system (12) including:
- a means for driving the wheel (1) into rotation;
- a means for cleaning the contact surface (7) of the wheel (1);
- a means for taking measurements relating to a profile of a contact surface (7) of the wheel (1) for identifying at least one worn area (10) on said contact surface;
- a means for adding an additional material in at least one identified worn area (10);
- a means for polishing the contact surface (7) of the wheel (1).

12. The system (12) according to claim 11, wherein the cleaning means, the means for taking measurements and the means for adding an additional material are integrated into a single reloading device (40).
